# EUROPÄISCHE PATENTSCHRIFT

(11) **EP 0 732 263 B1**
(45) Veröffentlichungstag und Bekanntmachung des Hinweises auf die Patenterteilung: **15.05.2002**
(21) Anmeldenummer: 96102318.1
(22) Anmeldetag: 16.02.1996
(51) Int. Cl.: B64D 13/00

(54) **Belüftungssystem zur Verminderung der Konzentration von Verunreinigungen im Flugzeugpassagierbereich**
Ventilation system to reduce the contaminants concentration in an aircraft cabin
Dispositif de ventilation pour diminuer la concentration de contaminants dans la cabine d'un avion

(30) Priorität: 17.03.1995 DE 19509773
(43) Veröffentlichungstag der Anmeldung: 18.09.1996
(73) Patentinhaber: Airbus Deutschland GmbH, 21129 Hamburg (DE)
(72) Erfinder: Markwart, Michael, Dipl.-Ing., D-25469 Holstenbek (DE); Petry, Klaus, Dipl.-Ing., D-21073 Hamburg (DE); Scherer,Thomas, Dr.-Ing., D-22587 Hamburg (DE)
(74) Vertreter: Hansmann, Dierk, Dipl.-Ing.

(56) Entgegenhaltungen:
- EP-A- 0 301 606
- GB-A- 2 242 515
- US-A- 4 742 761
- US-A- 5 261 855
- US-A- 5 312 072
- PATENT ABSTRACTS OF JAPAN vol. 15, no. 332 (C-0861), 23.August 1991 & JP 03 128004 A (MATSUSHITA ELECTRIC WORKS LTD.), 31.Mai 1991,

## Beschreibung

Die Erfindung bezieht sich auf eine Passagierflugzeugkabine mit einem Belüftungssystem zur Verminderung der Konzentration von Verunreinigungen im Flugzeugpassagierbereich gemäß dem Oberbegriff des Anspruchs 1.

Es sind Lösungen bekannt, bei denen dem Druckrumpf bekannter Flugzeugtypen in allen Bodenund Flugfällen ein konstanter Frischluftvolumenstrom zur Ventilation der Kabinenzonen zugeführt wird. Die Luftqualität wird insbesondere im Kabinenbereich durch diesen Volumenstrom aufrechterhalten. Um die Temperatur und die Luftgeschwindigkeit in der Ventilationsluft für die Flugzeuginsassen angenehm zu gestalten, wird ein konstanter Luftstrom in der Art sogenannter Rezirkulationsluft der Frischluft beigemischt. Bei der Rezirkulationsluft handelt es sich um verbrauchte Kabinenluft, die wiederverwendet wird. Dabei werden die den Frischluftaufbereitungseinrichtungen (Klimapacks) zugeordneten Luftmengensteuerungsventile auf konstanten Volumenstrom (Bleed Air) geregelt. Nur Fehlerfälle können die Mengenströme verändern.

Typisch bekannte Einrichtungen zur Rückführung der verbrauchten Kabinenluft besitzen zusätzliche Öffnungen, die sich im oberen Bereich eines Passagierkabinen- oder Küchen- und Toilettenbereiches befinden, durch die eine Absaugung von Geruchsstoffen und Tabakrauch erfolgt. Die verschmutzte Luft wird über spezielle Leitungen ganz oder teilweise abgesaugt und nach außerhalb des Druckrumpfes entlüftet. Diese Methode der Entlüftung von verunreinigter Kabinenluft ist mit zahlreichen Nachteilen verbunden. Aufgrund der zusätzlichen Öffnungen zum Abziehen der Luft und der zahlreichen Leitungen zum Transport der Luft erhöht sich die Komplexität der Ausrüstungen, das Gewicht und der Energiebedarf eines Passagierflugzeuges. Die zusätzlichen Öffnungen zum Abziehen der verschmutzten Luft verursachen bei Änderungen der Sitzplatzordnung im Passagierbereich inclusive der Zuweisung von Raucherbereichen einen erheblichen Installationsaufwand. Außerdem bleibt unbeachtet, daß in den Nichtraucherzonen, die den größten Teil der Flugzeugkabine einnehmen, der untere Kabinenbereich die stärkere Verschmutzung aufweist. Die Kabinenluftqualität im Passagierbereich wird gegenwärtig nur durch den konstanten Frischluft- (Außenluft-) strom sichergestellt.

Dabei korreliert die benötigte Frischluftmengenzufuhr funktionell mit der geforderten Kabinenluftqualität in diesen Klimabereichen, wobei ein Anteil der Kabinenabluft als Rezirkulationsluft der separat zugeführten Frischluft zur Ventilation zugeführt wird. Da die Kabinenluft in den abgegrenzten Bereichen offenbar mit Geruchsstoffen, beispielsweise Humangeruchsstoffen, Speisengerüche, und ggf. mit Tabakrauch - aber auch Bodenverschmutzungen oder sonstiger Schmutzablagerungen zusätzlich belastet wird, die durch die an Bord eines Flugzeuges befindlichen Flugzeuginsassen wesentlich beeinflußt und somit entscheidend verursacht wird, wirkt sich der ungünstige Reinlichkeitsgrad einer solchermaßen verbrauchten Luft sehr negativ auf das Wohlbefinden aller Passagiere und incl. Crewmitglieder aus.

Eine aus der EP 0 301 606 bekannte Lösung offenbart hierzu ein Ventilationssystem zum Vermindern der Konzentration von gas- und teilchenförmigen Verunreinigungen in einer Flugzeugkabine. Bei dieser Lösung wird ein Ventilationssystem beschrieben, mit dem die Luft aus dem Fußbodenbereich der Kabine komplett rezirkuliert wird, wodurch eine Belastung der rezirkulierten Kabinenluft mit Kohlendioxid- und Staubpartikeln aus dem Bodenbereich eintritt. Die Luft aus dem oberen Kabinenbereich wird durch zusätzliche Öffnungen abgezogen, wobei sie anteilig zur Druckhaltung rezirkuliert wird und damit auch die als Nichtraucherbereich eingerichteten Zonen des Flugzeuges belastet. Mit ihm besteht keine Möglichkeit, eine wünschenswerte saubere Zuluft, die menschlichen Bedürfnissen angepaßt ist, der Kabine zuzuführen, weil auf die wesentliche Beseitigung sonstiger Verunreinigungen im unteren Kabinenbereich verzichtet wurde. Die zusätzlichen Einrichtungen zum Abziehen der Luft verursachen bei Änderungen der Sitzplatzordnung und der Zuweisung von Raucherbereichen, wie sie im Linienbetrieb der Airlines verstärkt zu erwarten sind, einen erheblichen Installationsaufwand.

Eine Lösung gemäß der nachveröffentlichten DE 43 35 152 C2 bezieht sich ebenso auf ein Kabinenumluftsystem zur Klimatisierung von Rumpfeinheiten eines Passagierflugzeuges. Bei ihr geschieht die Aufbereitung der im Passagierbereich verbrauchten Abluft mittels einer Kabinenluftrecyclingeinheit, die rezirkulierte Luft aufbereitet, wobei diese mit externer Frischluft gemischt dem Kabinenraum geregelt zugeführt wird. Diese Lösung kann nicht zur Entsorgung von Raucherzonen und verschmutzten Anteilen aus dem Bodenbereich genutzt werden, wobei man sie auch nicht zur Belüftung von verschiedenartig genutzten Passagierbereichen einsetzen kann.

Die DE 865 358 zeigt eine weitere Lösung zum Steuern bzw. Regeln der Belüftung eines umschlossenen Raumes. Eine Einrichtung realisiert mittels einer Luftdusche das Zuführen eines Gemisches aus abgezogener und frischer Luft zu dem Raum. Mittels einer Kohlendioxidsteuer-bzw. Regeleinrichtung, die mit einem Kohlendioxidsensor verbunden ist und auf diesen anspricht, wobei ein Sensor die Kohlendioxidkonzentration im Raum überwacht, wird die außerhalb des Raumes abgesaugte Frischluft über ein Ventil in Abhängigkeit von der überwachten Konzentration gesteuert bzw. geregelt. Diese Lösung berücksichtigt nicht die Aspekte der Beseitigung von Keimen, Gerüchen, Tabakrauch und ein auf Spuren anderer Verunreinigungen ausgerichtetes Kabinenrecycling.

Demzufolge liegt der Erfindung die Aufgabe zugrunde, eine gattungsgemäße Passagierflugzeugkabine mit einem Belüftungssystem derart zu gestalten, daß mit ihm eine flexible Be- und Entlüftung der Raucher- und Nichtraucherbereiche eines Passagierflugzeuges, auch bei raschen Änderungen der Sitzplatzordnung des Kabinenbereiches, erfolgt. Es soll eine Verminderung der Konzentration an Luftverunreinigungen, die durch Geruchssubstanzen, Schmutzpartikel oder sonstige Schmutzablagerungen [Kohlendioxid, Tabakrauch (Zigaretten-, Zigarren-, Pfeifenrauch), Spuren anderer verunreinigender Stoffe] die Kabinenluft belasten, realisieren. Die Ventilation des zu belüftenden Kabinenbereiches ist auf eine ausreichende Be- und Entlüftung abzustellen, die optimal den Bedürfnissen der Flugpassagiere gerecht wird.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der Zeichnungen näher beschrieben. Es zeigen
- Fig.1: eine Anordnung mit Darstellung der Luftmengenventileinheit, des Kabinenluftauslasses, des Individualauslasses;
- Fig.1a: eine Anordnung mit Deckenluftauslässen als Mittel zur Ausblasung bzw. Absaugung und Luftduschen als Ausblaselemente;
- Fig.2: eine Anordnung mit Deckenluftauslässen als Mittel zur Ausblasung und Luftduschen als Absaugelemente;
- Fig.3: eine Anordnung mit Deckenluftauslässen als Mittel zur Ausblasung bzw. Absaugung und Luftduschen als Absaugelemente;
- Fig.3a: eine Anordnung mit Deckenluftauslässen als Mittel zur Absaugung und Luftduschen als Absaugelemente;
- Fig.4a: einen Kabinenluftauslaß in Ausblasstellung;
- Fig.4b: einen Kabinenluftauslaß in Absaugstellung;
- Fig.5: einen Individualauslaß als Überkopfluftabsaugung.

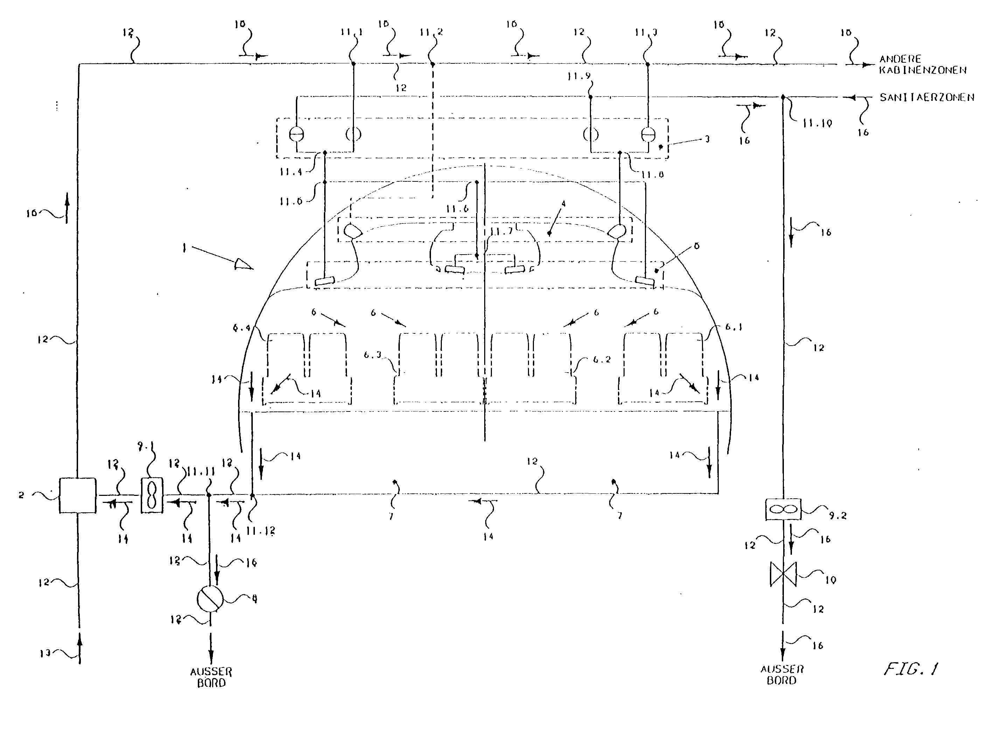

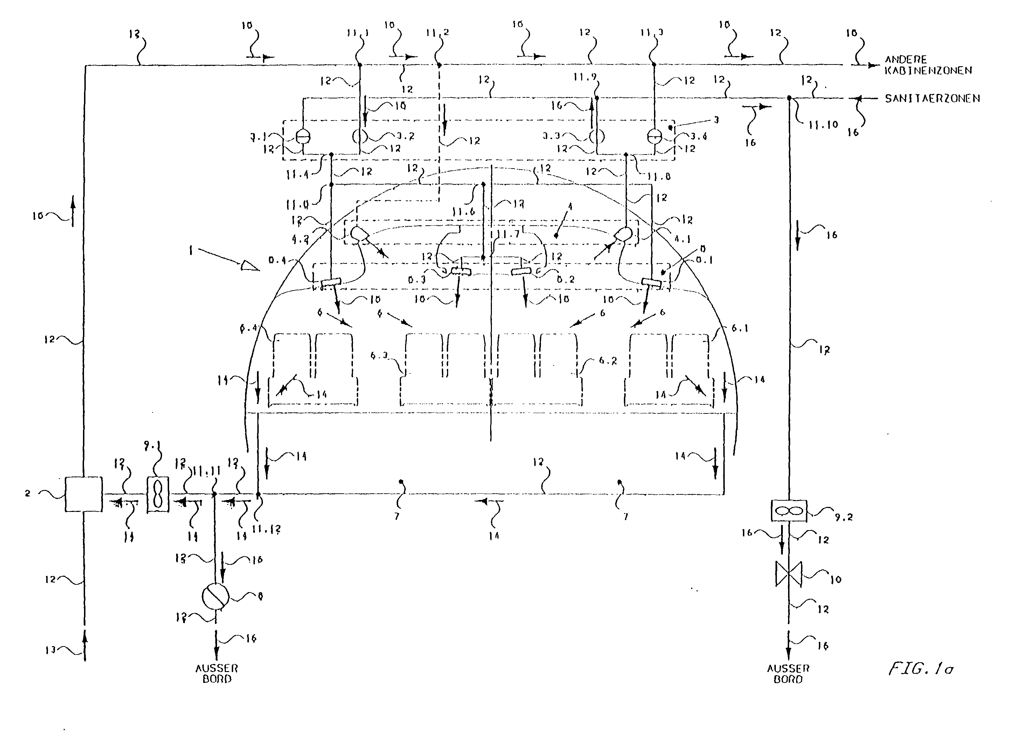

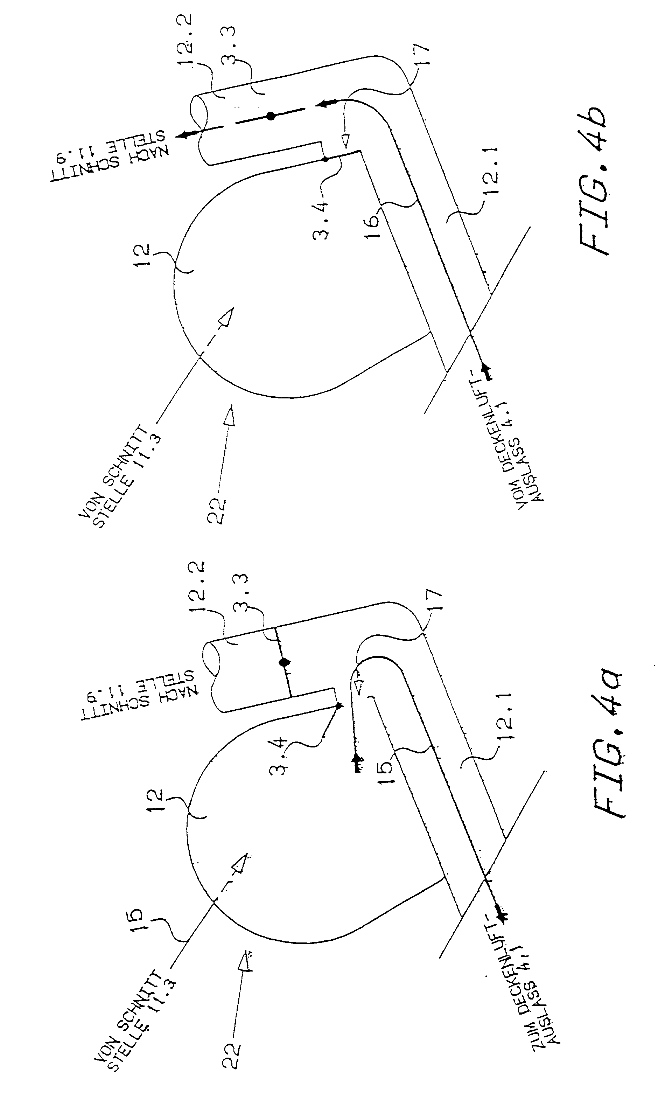

In der Fig.1 ist das Belüftungssystem für eine Flugzeugkabine 1 als Druckkabine in seinem grundsätzlichen Aufbau dargestellt. Es besteht aus einer Luftmischereinheit 2, die einmal über ein Rezirkulationsgebläse 9.1 mit der Flugzeugkabine 1 und separat mit (nicht gezeigten) Klimapacks verbunden ist. Der erwähnten Verbindung zur Flugzeugkabine 1 ist ein Abgang mit einem Druckregelventil 8 abgezweigt, der nach außerhalb des Flugzeugrumpfes führt. An die Luftmischereinheit 2 ist ausgangsseitig eine Luftmengensteuerventileinheit 3 angeschlossen, der mit separaten Verbindungen ein Kabinendeckenluftauslaß 4 und ein Individualluftauslaß 5 nachgeordnet sind. Alle Leitungsverbindungen sind luftstrombezogen mittels Luftstromverbindungsleitungen 12 oder später nach den Figuren 4a, 4b mittels Luftkanälen 12.1, 12.2 ausgeführt, die die einzelnen Elemente des Belüftungssystems miteinander verbindet.

Die Luftmengensteuerventileinheit 3 besteht aus mehreren Luftmengenventilen 3.1, 3.2, 3.3, 3.4, 3.5, 3.6, wobei je ein Absaugventil 3.1, 3.3, 3.5 und ein Ausblasventil 3.2, 3.4, 3.6 paarweise angeordnet sind, die sich funktionell einander bedingen. Beispielgemäß bilden zwei dieser Paare die Luftmengenventileinheit 3, die mit dem Kabinendeckenluftauslaß 4 und dem Individualluftauslaß 5 gemäß dem Beispiel nach Fig.1a luftstrombezogen verbunden sind.

Die Luftmengenventileinheit 3 und der Kabinendeckenluftauslaß 4 befinden sich unterhalb des Deckenbereiches der Flugzeugkabine 1, wogegen der Individualluftauslaß 5 sich unmittelbar über den Doppelsitzen 6.1, 6.2, 6.3, 6.4 der längs des Flugzeugrumpfes erstreckenden Doppelsitzreihen 6 in der Flugzeugkabine 1 unterhalb (nicht gezeigter) wandbefestigter Überkopffächer direkt über den plazierten Flugpassagieren befindet.
Die Doppelsitzreihen 6 sind am Fußboden der Kabine, der sich oberhalb eines Unterflurbereiches 7 erstreckt, befestigt. Eine doppelt nebeneinander angeordnete Doppelsitzreihe 6 soll sich beispielgemäß zentralisiert in der Kabinenmitte und je eine Doppelsitzreihe 6 nahe der betreffenden Kabinenwand befinden.
Zwischen dem Kabinenboden oder dem bodennahen Bereich der Flugzeugkabine 1 und der Luftmischereinheit 2 besteht eine (bereits erwähnte) Verbindung, in die das Rezirkulationsgebläse 9.1 mit einem (nicht gezeigten) vorgeschalteten Rezirkulationsfilter zwischengeschaltet wird. Mittels der in den Bodenbereich eingelassenen Luftstromverbindungsleitungen 12 wird aus der unteren Kabinenzone Rezirkulationsluft 14 als verbrauchte Kabinenluft abgeleitet, wobei die Leitungen in eine Schnittstelle 11.11 münden. Eine Leitung verbindet das Rezirkulationsgebläse 9.1 mit dieser Schnittstelle 11.11, von der weiterhin eine Leitung 12, die mit dem Druckregelventil 8 verbunden ist, abgezweigt ist. Der genannten Schnittstelle 11.11 wird ein Teil der Rezirkulationsluft als Abluft 16 entnommen, die mittels des Druckregelventiles 8 geregelt nach außerhalb des Flugzeugrumpfes abgeführt wird. Das Rezirkulationsgebläse 9.1 transportiert den verbleibenden Teil der Rezirkulationsluft 14 über eine Luftstromverbindungsleitung 12 zur Luftmischereinheit 2, die extern zugeführte Frischluft 13, beispielsweise als bezogene Zapfluft der Triebwerke, mit der Rezirkulationsluft 14 mischt. Eine ausgangsseitig der Luftmischereinheit 2 angeschlossene Luftstromverbindungsleitung 12 verbindet diese Mischeinheit mit der Luftmengenventileinheit 3. Die bereitgestellte Mischluft 15 durch die Luftmischereinheit 2, die man teilweise als frischluftgemischte Rezirkulationsluft 15 über die Luftstromverbindung: Luftmengenventileinheit 3, Kabinendeckenluftauslaß 4 und Individualluftauslaß 5 mit vorgelagerter(n) Schnittstelle(n) 11.1, 11.2, 11.3 in eine obere und / oder mittlere Zone der Flugzeugkabine 1 einleitet, wird mit ihrem verbleibenden Teil mittels einer Luftstromverbindungsleitung 12 in Flugzeuglängsrichtung zu anderen Kabinenzonen, beispielsweise den Sanitärzonen (Küche, Toilette), Transport-und Lagerzonen, geschleift. Dabei besteht zwischen den Schnittstellen 11.1 und 11.3 mittels einer Luftstromverbindungsleitung 12 eine Verbindung zu den verbleibenden Anschlüssen der Ausblasventile 3.2, 3.4, wogegen ein Deckenluftauslaß 4.2 direkt mit der Schnittstelle 11.2 verbunden ist.

Die verbleibenden Anschlüsse der Absaugventile 3.1, 3.3, 3.5 werden mit einer Schnittstelle 11.9 verbunden, die mit einer folgenden Schnittstelle 11.10 in Verbindung steht. Diese Verbindung dient als Abluftleitung und wird zum Transport verbrauchter Kabinenluft genutzt. An letztere Schnittstelle 11.10 wird außerdem eine Luftstromverbindungsleitung 12 als Abluftleitung gelegt, die weitestgehend verbrauchte Kabinenluft aus den genannten Sanitärzonen zuführt.

Ein mit der vorgenannten Schnittstelle 11.10 im Stich verbundener Abgang transportiert die zusammengeführte verbrauchte Abluft nach außerhalb des Flugzeugrumpfes. Innerhalb des Stiches befinden sich ein Abluftgebläse 9.2 und eine Venturieinheit 10, die in dieser Reihenfolge angeordnet sind. Eine Luftstromverbindungsleitung 12, die an den Ausgang der Venturieinheit 10 angeschlossen ist, leitet diesen Teil der Abluft außer Bord. Es besteht außerdem die Möglichkeit, diesen Teil der Abluft über eine (nicht gezeigte) zusätzliche Luftverbindungsleitung 12, die zwischen dem Abluftgebläse 9.2 und dem Druckregelventil 8 liegt, in die der Schnittstelle 11.11 abgezweigten Verbindung zum Druckregelventil 8 einzuspeisen, wobei diese Abluft dann vollständig nach außer Bord des Flugzeuges entlüftet wird, wodurch die Venturieinheit 10 entfallen würde.

Der Kabinendruck, der sich in der Flugzeugkabine 1 auf einem bestimmten Niveau befinden muß, wird mit dem Druckregelventil 8, durch das ein Teil der verbrauchten Kabinenluft den Flugzeugrumpf verläßt, geregelt. Dabei befindet sich die Menge dieser Abluft 16 in Korrelation zur zugeführten Menge an frischluftgemischter Rezirkulationsluft 15 in dem Kabinenbereich. Verändern sich die Druckverhältnisse in der Flugzeugkabine 1 gegenüber einer Sollwertvorgabe, dann wird die Abfuhr dieses Teiles der Abluft 16 durch das Druckregelventil 8 entsprechend gedrosselt oder freigegeben.

Die Fig.1a zeigt die Belüftung eines Raucherbereiches der Flugzeugkabine 1, die sich von der üblichen Belüftung eines Nichtraucherbereiches in einem Passagierflugzeug wesentlich unterscheidet.Ein Belüftungssystem, das sich an den vorgenannten grundsätzlichen Aufbau nach Fig. 1 anlehnt, wird sich für umzugestaltende Nichtraucherzonen im Passagierbereich eines Passagierflugzeuges gleichermaßen eignen. Es wären Veränderungen der nachfolgend beschriebenen Art vorzunehmen. Bei einem derartigen Ventilationssystem für Nichtraucherbereiche würden die Ventile der Luftmengenventileinheit 3 so zu schalten sein, daß die Absaugventile 3.1, 3.3 geschlossen und die Ausblasventile 3.2, 3.4 geöffnet sind.

Die Mischluft (Ventilationsluft) als frischluftgemischte Rezirkulationsluft 15 wird aus dem (in Ausblasstellung betriebenen) Deckenluftauslaß 4.2 und einem umschaltbaren Deckenluftauslaß 4.1 des Kabinendeckenluftauslasses 4 und Luftduschen 5.1, 5.2, 5.3, 5.4 des Individualauslasses 5 ausgeblasen, so daß immer recycelte - weitestgehend durch (einen nicht gezeigten) Filter von Schmutzablagerungen und Spuren sonstiger verunreinigender Stoffe befreite - Luft das an die Bedürfnisse der Passagiere (Nichtraucher) angepaßte Reinheitsniveau aufweist. Ansonsten gäbe es keine weiteren Veränderungen gegenüber der Lösung für Raucherzonen.

Das Belüftungssystem zur Verminderung der Konzentration von Verunreinigungen in den Raucherzonen eines Passagierflugzeuges nach Fig. 1a entspricht allgemein dem Aufbau nach Fig.1, wobei die Luftmengenventileinheit 3 mit dem Kabinendeckenluftauslaß 4 und dem Individualluftauslaß 5 infolge der besonderen Art der Ventilation miteinander verbunden sind. Dabei bilden das Absaugventil 3.1 und das Ausblasventil 3.2 sowie das Absaugventil 3.3 und das Ausblasventil 3.4 je ein Ventilpaar. Das Absaugventile 3.1 und das Ausblasventil 3.4 befinden sich im geschlossenen Zustand, wogegen das Ausblasventil 3.2 und das Absaugventil 3.3 sich in geöffneter Stellung befinden. Das Ausblasventil 3.2 des einen Ventilpaares und das Ausblasventil 3.4 des anderen Ventilpaares sind je an eine Schnittstelle 11.1, 11.3 gelegt, die der Mischluft 15 führenden Luftstromverbindungsleitung 12 als abgangsseitig der Luftmischereinheit 2 verlaufenden Hauptverbindungsleitung zwischengeschaltet sind. Diese Hauptverbindungsleitung wird von der Schnittstelle 11.3 aus in andere zu belüftende Kabinenzonen des Flugzeuges weitergeführt. Das Absaugventil 3.1 befindet sich in geschlossenem und das Absaugventil 3.3 in geöffnetem Zustand. Beide letztgenannten Ventile werden leitungsmäßig mit der Schnittstelle 11.9 verbunden, die leitungsmäßig in die weitere Schnittstelle 11.10 mündet. An letztere Schnittstelle 11.10 ist eine mit den Sanitärzonen (Küche, Toilette) verbundene Luftstromverbindungsleitung 12 gelegt, die die verbrauchte Luft dieser Zonen als Abluft zuführt.
Die verbleibenden Anschlüsse sind je Ventilpaar an eine leitungsmäßige Luftbrücke angeschlossen. Die Luftbrücke des einen Ventilpaares besitzt eine Schnittstelle 11.4 und die Luftbrücke des anderen Ventilpaares besitzt eine Schnittstelle 11.8; letztgenannte Schnittstelle 11.8 steht mit dem einen Deckenluftauslaß 4.1 des Kabinendeckenluftauslasses 4 in Verbindung, wogegen der andere Deckenluftauslaß 4.2 des Kabinendeckenluftauslasses 4 direkt an die Schnittstelle 11.2 der vorgenannten Hauptverbindungsleitung geführt ist. Die Schnittstelle 11.4 der Luftbrücke des einen Ventilpaares wird an eine Schnittstelle 11.5 gelegt, an welche die vier Luftduschen 5.1 bis 5.4, die den Individualluftauslaß 5 bilden, luftstrombezogen angeschlossen sind. Dabei sind zwei Luftduschen 5.2, 5.3, die sich mittig der Flugzeugkabine befinden, an einer Schnittstelle 11.7 zusammengeführt, die sich leitungsmäßig zu einer weiteren Schnittstelle 11.6 fortsetzt. Eine Luftdusche 5.1 ist an letztgenannte Schnittstelle 11.6 angeschlossen, wobei diese Schnittstelle 11.6 außerdem mit der vorgenannten Schnittstelle 11.5 verbunden ist. An diese ist letztlich die verbleibende Luftdusche 5.4 angeschlossen.
Der weitere Aufbau des zur Belüftung des Raucherbereiches der Flugzeugkabine vorgesehenen Systems ist aus der Fig.1 ersichtlich.

Da das Absaugventil 3.1 und das Ausblasventil 3.4 der beiden Ventilpaare geschlossen ist, wird der Raucherbereich aus der Hauptverbindungsleitung über das geöffnete Ausblasventil 3.2 mit den nachgeordneten Luftduschen 5.1 bis 5.4 mit (temperierter) Mischluft 15 als frischluftgemischte Rezirkulationsluft versorgt. Gleiche Mischluft 15 wird aus dem Deckenluftauslaß 4.2 direkt aus der Hauptverbindungsleitung eingeblasen. Durch die geöffnete Stellung des Absaugventiles 3.3 erfolgt eine Absaugung der Rezirkulationsluft 14 als verbrauchte Kabinenluft durch den Deckenluftauslaß 4.1 zur Schnittstelle 11.9 bzw. 11.10; wo man sie mit der verbrauchten Rezirkulationsluft der Sanitärzonen zusammenführt. Die an die Schnittstelle 11.10 angeschlossene Luftstromverbindungsleitung 12 als Stichleitung führt diese Abluft über das weitere Abluftgebläse 9.2 und die Venturieeinheit 10 nach außerhalb des Flugzeugrumpfes. Dieses Abluftgebläse 9.2 besitzt einen Druckschalter, der auf die Druckdifferenz zwischen dem Innendruck der Flugzeugkabine 1 und Außendruck außerhalb des Flugzeugrumpfes anspricht. Als Venturieinheit 10 ist eine Lavaldüse eingesetzt, die den Volumenstrom der Abluft konstant hält. Das Abluftgebläse 9.2 muß in Parkstellung des Flugzeuges zwingend betrieben werden, da der Abluftstrom im Flugmodus durch den Differenzdruck zwischen der Flugzeugkabine 1 und der äußeren Umgebung (außerhalb des Flugzeuges) angetrieben wird. Der Kabinendruck der Flugzeugkabine 1 wird im Flugmodus mit dem Druckregelventil 8 durch die rezirkulierte Abluft 14 aus dem unteren Teil der Kabine incl. des Unterflurbereiches 7 geregelt, die außer Bord strömt.

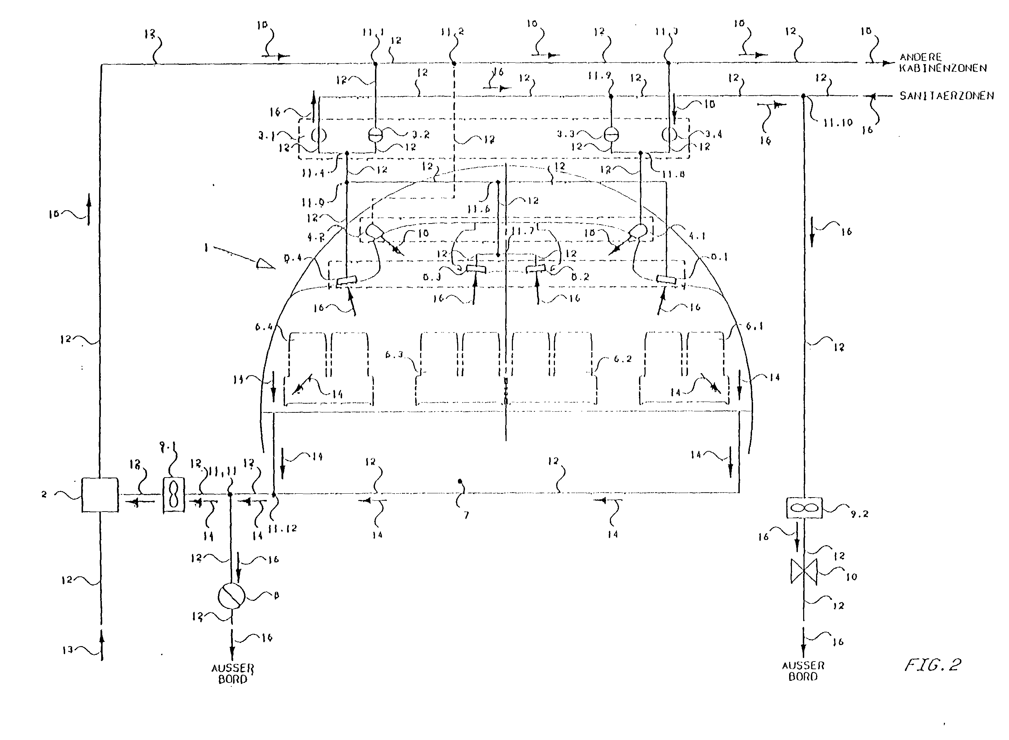

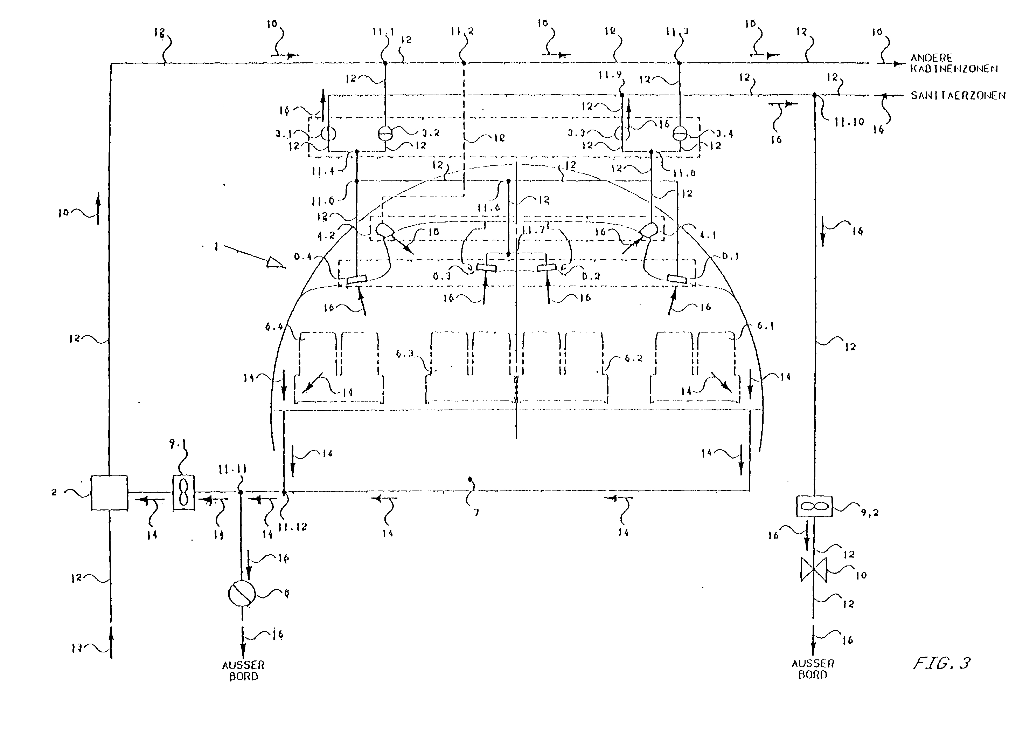

Die Fig.2 zeigt eine weitere Möglichkeit der Belüftung eines Raucherbereiches der Flugzeugkabine 1, die sich insofern nur durch die gewählte Stellung der Ventile der Luftmengenventileinheit 3 unterscheidet.

Bei dieser Art der Belüftung befindet sich das Absaugventil 3.1 und Ausblasventil 3.4 in geöffneter sowie das Ausblasventil 3.2 und das Absaugventil 3.3 in geschlossener Stellung. Der Deckenluftauslaß 4.1, der über das Ausblasventil 3.4 von der Hauptverbindungsleitung versorgt wird, läßt in die Flugzeugkabine 1 frischluftgemischte Rezirkulationsluft 15 ein.
Durch die Öffnung des Absaugventiles 3.1 des einen Ventilpaares besteht die Möglichkeit der Benutzung aller Luftduschen 5.1 bis 5.4 als Luftabsaugung.
Die direkte Bereitstellung der frischluftgemischten Rezirkulationsluft 15 über den Deckenluftauslaß 4.2 geschieht mittels Lufteinblasung in die Flugzeugkabine 1 nach Fig.1a.
Die Ventilation eines Teiles der Abluft aus der Flugzeugkabine 1 und der Sanitärzone erfolgt gemäß Fig.1a ebenso nach außer Bord.

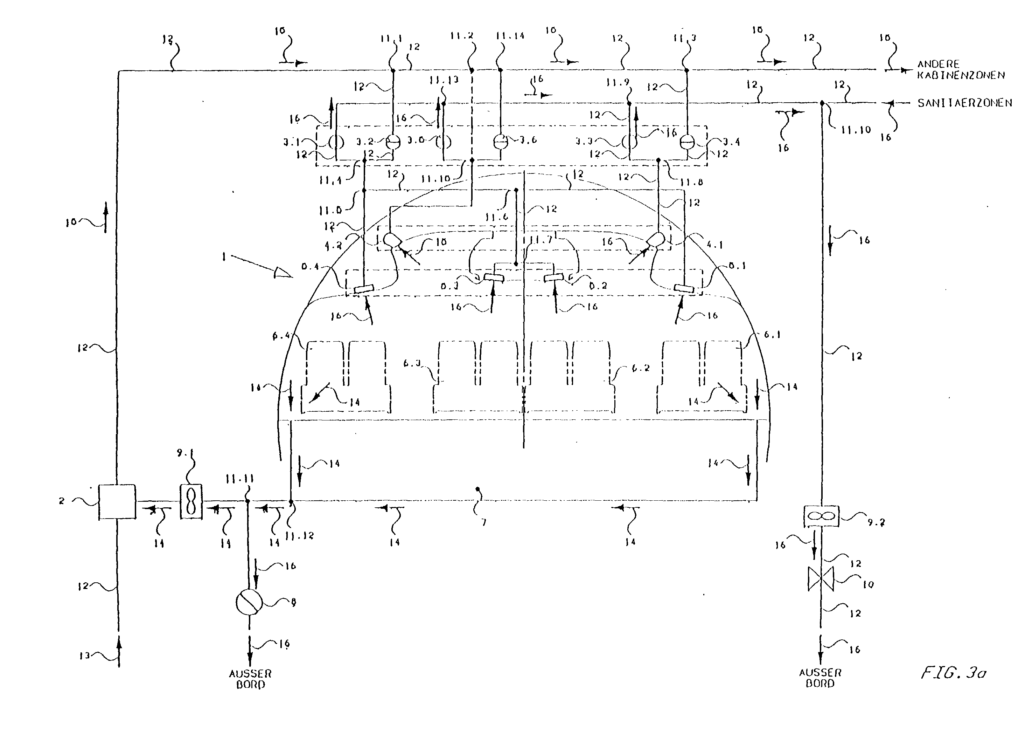

Die Fig.3 zeigt gegenüber Fig. 1a und Fig.2 eine weitere Möglichkeit der Belüftung eines Raucherbereiches der Flugzeugkabine 1, die sich auch nur durch die gewählte Stellung der Ventile der Luftmengenventileinheit 3 unterscheidet.
Bei dieser Art der Belüftung befinden sich die Absaugventile 3.1, 3.3 in geöffneter sowie die Ausblasventile 3.2, 3.4 in geschlossener Stellung. Der Deckenluftauslaß 4.1, leitet über das geöffnete Absaugventil 3.3 verbrauchte Kabinenluft in eine Abluftleitung 12, die mit der Schnittstelle 11.9 verbunden ist. Alle Luftduschen 5.1 bis 5.4 dienen als Luftabsaugung und führen ebenso über das geöffnete Absaugventil 3.1 verbrauchte Kabinenluft der letztgenannten Schnittstelle 11.9 zu. Da diese mit der nachgeordneten Schnittstelle 11.10 verbunden ist, kann der genannte Teil der Abluft gemäß der vorbeschriebenen Art außer Bord geführt werden. Es erfolgt allein über den Deckenluftauslaß 4.2 die direkte Bereitstellung der frischluftgemischten Rezirkulationsluft 15 mittels Lufteinblasung in die Flugzeugkabine 1 nach vorbeschriebener Art.

Die Fig.3a zeigt gegenüber den vorgenannten Möglichkeiten ein in den Ventilationskreis zusätzlich eingeordnetes Ventilpaar, das mit einem Absaugventil 3.5 an eine Schnittstelle 11.13 gelegt ist, die mit der Schnittstelle 11.9 der vorgenannten Abluftleitung in Verbindung steht. Ein Ausblasventil 3.6 des zusätzlichen Ventilpaares liegt an einer Schnittstelle 11.14 der Hauptverbindungsleitung, die sich zwischen den beiden Schnittstellen 11.1. und 11.3 befindet. Dadurch besteht die Möglichkeit der variablen Nutzung des (vorher direkt an die Hauptverbindungsleitung angeschlossenen) Deckenluftauslaßes 4.2 zur Lufteinblasung oder Luftabsaugung.

Bei dieser Art der Belüftung befinden sich , wie in Fig.3 bereits gezeigt, die Absaugventile 3.1, 3.3 in geöffneter sowie die Ausblasventile 3.2, 3.4 in geschlossener Stellung. Die Absaugung der verbrauchten Kabinenluft 16 durch den Deckenauslaß 4.1 und die Luftduschen 5.1 bis 5.4 des Individualluftauslasses 5 geschieht nach der vorbeschriebenen Art und Weise, wie bezüglich der Fig.3 erläutert.

Durch die Öffnung des Absaugventiles 3.5 und Schließung des Ausblasventiles 3.6 des zusätzlichen Ventilpaares wird verbrauchte Kabinenluft 16 über die Schnittstelle 11.13 in die Absaugleitung zur Schnittstelle 11.10 gesaugt. Diese Abluft strömt über den im Stich verbundenen Abgang gemeinsam mit weiteren Teilen an Abluft zusätzlich nach außerhalb des Flugzeugrumpfes.

Bei Schließung dieses Absaugventiles 3.5 und Öffnung des Ausblasventiles 3.6 dieses Ventilpaares wird über die Hauptverbindungsleitung und den weiteren Deckenluftauslaß 4.2 die Flugzeugkabine 1 zusätzlich mit frischluftgemischter Rezirkulationsluft versorgt.
Der weitere Deckenluftauslaß 4.2 wird (mit dem Verändern der Stellung der ihm zugeordneten Ventile) umschaltbar, so daß er als Luftabsaugung oder Luftausblasung dient.

Da man den Großteil der Flugzeugkabine 1 als Nichtraucherbereich und nur einen begrenzten Raum dergleichen als Raucherbereich eingerichtet hat und die meisten Lufteinlässe als Einblasungen fungieren, strömt der Hauptteil der verbrauchten Kabinenluft 16 über das Druckregelventil 8 nach außerhalb des Flugzeugrumpfes 1. Die unterschiedlichen Ventilstellungen der Ventile der Luftmengenventileinheit 3 in den Ventilgruppen ermöglichen entsprechend den Darstellungen zu den genannten Figuren eine variable Be- und Entlüftung der Flugzeugkabine 1, so daß eine variable Gestaltung zu unterschiedlich nutzbaren Passagierbereichen (Nichtraucher- und/ oder Raucherbereich) kurzfristig geschehen kann. Dabei befindet sich in der Nähe der beiden Deckenluftauslässe 4.1, 4.2 in den Raucherzonen eine Sensoreinheit, die auf den Gehalt an toxischen Stoffen (Tabakrauch) der Luft anspricht. Sie leitet eine entsprechende Information bei Überschreitung eines vorbestimmten Schwellwertes an das betreffende Ventilpaar weiter, so daß deren Umschaltung automatisch oder von Hand auf Absaug- oder Ausblasfunktion erfolgt.

Fig.4a und Fig.4b zeigt die Integration einer Anordnung zu einem Kabinenluftauslaß 22, der als integrales Objekt mit den entsprechenden Luftstromverbindungsleitungen 12 verbunden wird. Der Kabinenluftauslaß 22 setzt sich aus der Vereinigung von Mitteln der Luftmengenventileinheit 3 und des Kabinendeckenluftauslasses 4 zusammen, bei dem die Integration eines Ventilpaares (je ein Absaugventil 3.1, 3.3, 3.5 und ein Ausblasventil 3.2, 3.4, 3.6) in zwei (recht-)winklig verbundenen Luftkanälen 12,1, 12.2 erfolgt. In Längsrichtung eines ersten Luftkanales 12.1 befindet sich eine Öffnung, die als Schlitz 17 ausgeführt ist, wobei ein an die Öffnung angeformter Stutzen mit der Hauptverbindungsleitung verbunden wird. In der Schlitzöffnung sitzt ein Ausblasventil 3.2, 3.4, 3.6, welches diese Öffnung je nach Ventilstellung verschließt oder freigibt. Innerhalb des Kanalquerschnittes des zweiten Luftkanales 12.2 sitzt ein Absaugventil 3.1, 3.3, 3.5, das den Querschnitt des Luftkanales verschließt oder freigibt.

Der Kabinenluftauslaß 22 befindet sich beispielgemäß nach der Fig.4a in einer Ausblasstellung. Durch die Schließung des Kanalquerschnittes des zweiten Luftkanales 12.2 mittels des Absaugventiles 3.3 kann keine Abluft 16 der Absaugleitung zur Schnittstelle 11.9 strömen. Dem Kabinenluftauslaß 22 wird von der Hauptverbindungsleitung ein Teil der Mischluft 15 als frischluftgemischte Rezirkulationsluft zugeleitet, die über das geöffnete Ausblasventil 3.4 und die Schnittstelle 11.8 der Luftbrücke des Ventilpaares durch den Deckenluftauslaß 4.1 in die Flugzeugkabine 1 eingelassen wird. Der verbleibenden Teil der Mischluft 15 strömt in Flugzeuglängsrichtung zu den anderen Kabinenzonen weiter.

Nach der Fig.4b befindet sich der Kabinenluftauslaß 22 in einer Absaugstellung. Der Schlitz 17 ist durch das Ausblasventil 3.4 geschlossen, so daß an dieser Stelle keine Mischluft 15 eindringen kann. Die geöffnete Stellung des Absaugventiles 3.3 gibt den Querschnitt des Luftkanales 12.2 frei, wodurch die vom Deckenluftauslaß 4.1 abgesaugte Abluft 16 aus der Flugzeugkabine 1 über die Schnittstelle 11.9 in die Abluftleitung geleitet wird.

Der beispielgemäße Kabinenluftauslaß 22 als integrale Anordnung ist durch die variable Änderung der Ventilstellungen des betreffenden Ventilpaares umschaltbar gestaltet. Er wird in dieser Kombination für alle Anschlüsse mit den betreffenden Luftverbindungsleitungen 12 im Deckenbereich der Flugzeugkabine 1 eingesetzt.

Der Kabinenluftauslaß 22 läßt sich außerdem derart gestalten, daß er ausschließlich zur Absaugung oder zur Ausblasung dient. In Absaugstellung wird der Schlitz 17 permanent geschlossen, wobei das Absaugventil 3.3 und das Ausblasventil 3.4 entfallen. In Ausblasstellung entfallen ebenfalls diese beiden Ventile, wobei der zweite Luftkanal 12.2 permanent verschlossen und der Schlitz 17 geöffnet bleibt.

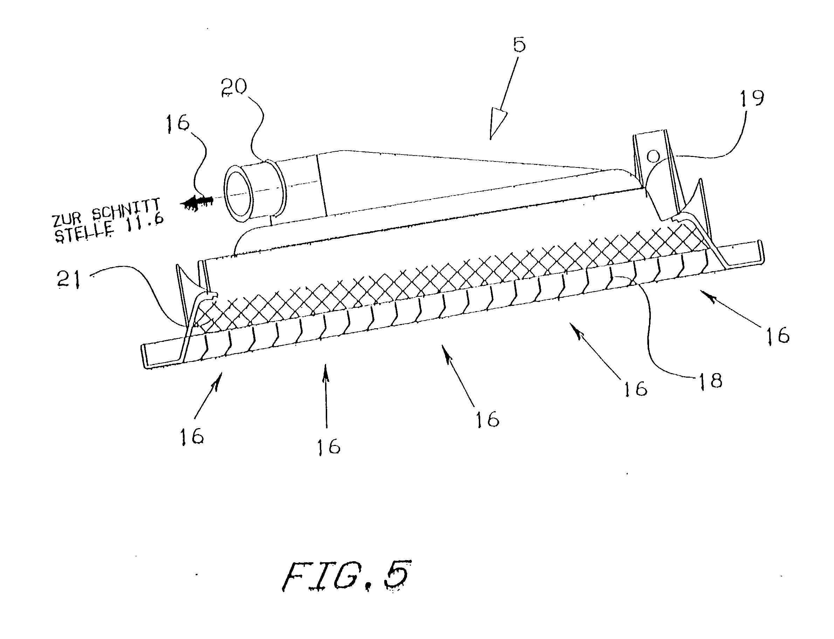

Die Fig. 5 zeigt einen Individualluftauslaß 5 als Überkopfluftabsaugung. Er besteht aus einem Luftdurchlauf 20, der einen rohrförmigem Anschlußstutzen besitzt. Dem Luftdurchlauf 20 ist längs einer Saugfläche, die man zweckmäßigerweise zu den Köpfen der Passagiere richtet, ein austauschbarer Luftfilter 21 und ein Schutzgitter 18 aufgesetzt, wobei das Schutzgitter 18 austauschbar am Luftdurchlauf 20 befestigt wird. Die verbrauchte Kabinenluft passiert als abgesaugte Abluft 16 den Luftfilter 21 und die Saugfläche und gelangt danach über eine Luftstromverbindungsleitung 12, die an den Anschlußstutzen angemufft wird, in eine weitere Luftstromverbindungsleitung 12, die mit der Luftmengenventileinheit 3 bzw. dem vorbeschriebenen Kabinenluftauslaß 22 in Verbindung steht.

Dieser Individualluftauslaß 5 läßt sich durch Entfernung des Schutzgitters 18 insofern variabel umrüsten, wonach man anstelle des Luftfilters 21 eine Luftdusche 5.1, 5.2, 5.3, 5.4 positioniert. Bei Stellung der Luftdusche 5.1, 5.2, 5.3, 5.4 in Ausblasstellung kann - nach der vorbeschriebenen Art Mischluft 15 aus der Hauptverbindungsleitung in den Kabinenraum geführt werden, sofern das Ausblasventil 3.2, 3.4, 3.6 sich im geöffneten und das Absaugventil 3.1, 3.3, 3.5 im geschlossenen Zustand befindet.

## Patentansprüche

1. Passagierflugzeugkabine mit einem Belüftungssystem zur Verminderung der Konzentration von Verunreinigungen im Flugzeugpassagierbereich, insbesondere in den Raucherzonen eines Passagierflugzeuges, mit dem man eine an menschliche Bedürfnisse angepaßte Beseitigung von Partikeln, Gerüchen oder sonstige Schmutzablagerungen, insbesondere Kohlendioxid, Zigarettenrauch oder Spuren anderer verunreinigender Stoffe aus dem Raucherbereich einer Flugzeugkabine (1), realisiert, wobei sich auf dem Kabinenboden, der oberhalb eines Unterflurbereiches (7) liegt, der Flugzeugpassagierbereich befindet, dem mehrere auf dem Kabinenboden angeordnete Doppelsitze (6.1, 6.2, 6.3, 6.4), die längs eines Flugzeugrumpfes als Druckrumpf im Kabinenbereich zu Sitzreihen zusammengestellt sind, zugeordnet sind, das sich aus einer Luftmischereinheit (2), einer Luftmengenventileinheit (3), einem Kabinendeckenluftauslaß (4) und einem Individualluftauslaß (5), welche miteinander verbunden sind, aufbaut, wobei zwischen der Luftmengenventileinheit (3) und dem Kabinenluftauslaß (4) sowie dem Individualluftauslaß (5) eine unmittelbare Verbindung besteht, bei dem die Luftmischereinheit (2) zwei Eingänge besitzt, an deren einem Eingang Frischluft (13) zugeführt wird, bei dem eine Verbindung zwischen einem Rezirkulationsgebläse (9.1) und dem Kabinenboden- oder dem bodennahen Bereich der Flugzeugkabine (1) besteht, wobei das Rezirkulationsgebläse (9.1) eingangsseitig Rezirkulationsluft (14) als verbrauchte Kabinenluft aufnimmt, die es ausgangsseitig über eine nächste Verbindung mit dem anderen Eingang der Luftmischereinheit (2) an letztere abgibt, bei dem der Verbindung zwischen der Luftmischereinheit (2) und der Luftmengenventileinheit (3) eine weitere Verbindung abgezweigt ist, die aufbereitete Mischluft (15) als frischluftgemischte Rezirkulationsluft führt und mit anderen Kabinenzonen des Passagierflugzeuges verbunden ist, bei dem zwischen der Luftmengenventileinheit (3) und den nachgeordneten Sanitärzonen des Passagierflugzeuges eine weitere nachgeordnete Verbindung besteht, der eine andere Verbindung abgezweigt ist, welche einen Teil der verbrauchten Kabineoluft und / oder sonstigen zonalen Abluft nach außerhalb des Flugzeugrumpfes abführt, und bei dem alle Verbindungen luftstrombezogenen mittels Luftstromverbindungsleitungen (12) ausgeführt sind,
**dadurch gekennzeichnet, daß**
- die Luftmengenventileinheit (3) aus mehreren paarweise zusammengesetzten Luftmengenventilen (3.1, 3.2, 3.3, 3.4, 3.5, 3.6) besteht, wobei immer ein Absaugventil (3.1, 3.3, 3.5) und ein Ausblasventil (3.2, 3.4, 3.6) ein Ventilpaar bilden, zwischen denen anschlußseitig eine Brückenverhindung besteht und die verbleibenden Anschlüsse der Absaugventile (3.1, 3.3, 3.5) geschleift und mit der anderen abgezweigten Verbindung verbunden sind, und wobei die verbleibenden Anschlüsse der Ausblasventile (3.2, 3.4, 3.6) an die Mischluft (15) führende Verbindung angeschlossen sind,
- der Kabinendeckenluftauslaß (4) aus mehreren Deckenluftauslässen (4.1, 4.2) besteht, die sich unterhalb des Deckenbereiches der Flugzeugkabine (1) an der Kabinenwand oberhalb der seitlich befindlichen Doppelsitzreihen (6.1, 6.4) befestigten Gepäckfächer befinden, bei dem wenigstens ein Deckenluftauslaß (4.1) mittels eines Ventilpaares, dessen Brückenverbindung mit ihm verbunden ist, umschaltbar und ein in Ausblasstellung betriebener weiterer Deckenluftauslaß (4.2) direkt an die Mischluft (15) führende Verbindung angeschlossen ist,
- der Individualluftauslaß (5) aus mehreren Luftduschen (5.1, 5.2, 5.3, 5.4) besteht, die sich unmittelbar über den Doppelsitzen (6.1, 6.2, 6.3, 6.4) unterhalb der Überkopffächer befinden, oder aus einem Luftdurchlauf (20) mit rohrförmigem Anschlußstutzen, einem austauschbaren Luftfilter (21) und einem Schutzgitter (18) aufgebaut ist, wobei dem Luftdurchlauf (20) längs einer Saugfläche, die sich dem Kopfbereich der Doppelsitze (6.1, 6.2, 6.3, 6.4) zuwendet, der Luftfilter (21) und das Schutzgitter (18) aufgesetzt ist, dabei das Schutzgitter (18) auf dem Luftdurchlauf (20) befestigt ist, das den Luftfilter (21) am Luftdurchlauf (20) fixiert, wobei die Brückenverbindung eines anderen Ventilpaares mit den Luftduschen (5.1, 5.2, 5.3, 5.4) oder dem Anschlußstutzen des Luftdurchlaufs (20) verbunden ist,
- der Verbindung zwischen dem Rezirkulationsgebläse (9.1) und dem Kabinenbodenoder dem bodennahen Bereich eine zusätzliche Verbindung abgezweigt ist, die mit einem Druckregelventil (8) verbunden ist, wobei letzteres über eine mit ihm verbundene nachgeordnete Verbindung einen weiteren Teil der verbrauchten Kabinenluft nach außerhalb des Flugzeugrumpfes führt,
- dem Rezirkulationsgebläse (9.1) ein Rezirkulationsfilter vorgeschaltet ist, der einen verbleibenden Teil der verbrauchten Kabinenluft, die nicht über die nachgeordnete Verbindung den Flugzeugrumpf verläßt, filtert.

2. Belüftungssystem nach Anspruch 1, **dadurch gekennzeichnet, daß** die Luftmengenventileinheit (3) aus zwei Ventilpaaren besteht, die so geschaltet sind, daß
a) das Absaugventil (3.1) des einen Ventilpaares und das Ausblasventil (3.4) des anderen Ventilpaares geschlossen ist und die verbleibenden Ventile des betreffenden Ventilpaares geöffnet sind, wobei die dem Luftstrom zugeordneten Luftduschen (5.1, 5.2, 5.3, 5.4) in geschalteter Ausblasstellung frischluftgemischte Rezirkulationsluft (15) abgeben und der in Absaugstellung betriebene eine Deckenluftauslaß (4.1) einen Teil der verbrauchten Kabinenluft (16) über das Absaugventil (3.3) abführt und der weitere in Ausblasstellung betriebene Deckenluftauslaß (4.2), der an die frischluftgemischte Rezirkulationsluft führende Verbindung angeschlossen ist, diese aufbereitete Luft abgibt,
oder
b) das Absaugventil (3.1) des einen Ventilpaares und das Ausblasventil (3.4) des anderen Ventilpaares geöffnet ist und die verbleibenden Ventile des betreffenden Ventilpaares geschlossen sind, wobei die dem Luftstrom zugeordneten Luftduschen (5.1, 5.2, 5.3, 5.4) in geschalteter Absaugstellung verbrauchte Kabinenluft (16) aufnehmen und der in geschalteter Ausblasstellung befindliche Deckenluftauslaß (4.1) über das Ausblasventil (3.4) frischluftgemischte Rezirkulationsluft (15) abgibt und der weitere in Ausblasstellung betriebene Deckenluftauslaß (4.2), der an die frischluftgemischte Rezirkulationsluft führende Verbindung angeschlossen ist, diese aufbereitete Luft abgibt,
oder
c) das Absaugventil (3.1) des einen Ventilpaares und das Absaugventil (3.3) des anderen Ventilpaares geöffnet und die verbleibenden Ventile des betreffenden Ventilpaares geschlossen sind, wobei die dem Luftstrom zugeordneten Luftduschen (5.1, 5.2, 5.3, 5.4) in geschalteter Absaugstellung verbrauchte Kabinenluft (16) aufnehmen und der in geschalteter Absaugstellung befindliche Deckenluftauslaß (4.1) über das Absaugventil (3.3) verbrauchte Kabinenluft (16) abführt und der weitere in Ausblasstellung betriebene Deckenluftauslaß (4.2), der an die frischluftgemischte Rezirkulationsluft führende Verbindung angeschlossen ist, diese aufbereitete Luft abgibt.

3. Belüftungssystem nach Anspruch 1, **dadurch gekennzeichnet, daß** die Luftmengenventileinheit (3) wenigstens aus drei Ventilpaaren besteht und der weitere Deckenluftauslaß (4.2) mit der Brückenverbindung eines zusätzlichen Ventilpaares verbunden ist, und daß bei dem zusätzlichen Ventilpaar das Absaugventil (3.5) geöffnet und das Ausblasventil (3.6) geschlossen ist, wobei der weitere Deckenluftauslaß (4.2) in Absaugstellung betrieben und über das Absaugventil (3.5) verbrauchte Kabinenluft (16) abführt.

4. Belüftungssystem nach Anspruch 1, **dadurch gekennzeichnet, daß** in der Nähe der Deckenluftauslässe (4.1, 4.2) eine Sensoreinheit sitzt, die auf den Gehalt toxischer Stoffe in der Kabinenluft anspricht und das betreffende Ventilpaar elektrisch anspricht, so daß deren automatische Umschaltung erfolgt.

5. Belüftungssystem nach Anspruch 1, **dadurch gekennzeichnet, daß** die abgezweigte andere Verbindung aus einem an die weitere nachgeordnete Verbindung angeschlossenen Abluftgebläse (9.2) und einer diesem nachgeordneten Venturieinheit (10) besteht, die miteinander verbunden sind, wobei letztere als Lavaldüse ausgeführt ist und die abgezweigte Verbindung die gesamte aus einem Überkopfbereich, der sich unterhalb der Überkopffächer flächenmäßig erstreckt, und aus dem Deckenbereich der Flugzeugkabine (1) abgesaugte Luft einbezogen der verbrauchten Luft aus den Sanitärzonen des Passagierflugzeuges als Abluft nach außerhalb des Flugzeugrumpfes führt, oder daß dem Abluftgebläse (9.2) nachgeordnet eine Verbindung abgezweigt ist, die mit der zusätzlichen Verbindung zum Druckregelventil (8) nahe letzterem vorgeordnet verbunden ist, wobei die nachgeordnete Stichleitung zur Venturieinheit (10) entfällt und-die Abluft zusammen mit dem weiteren Teil der verbrauchten Kabinenluft über diese Verbindung und nicht über die Venturieinheit (10) den Flugzeugrumpf verläßt.

6. Belüftungssystem nach Anspruch 1, **dadurch gekennzeichnet, daß** ein Kabinenluftauslaß (22), der eine Vereinigung von Mitteln der Luftmengenventileinheit (3) und des Kabinendeckenluftauslasses (4) darstellt, aus der Integration eines dem betreffenden Luftstrom zugeordneten Ventilpaares mit die Luftmengenventile (3.1, 3.2; 3.3, 3.4; 3.5, 3.6) aufnehmenden Luftkanälen (12.1, 12.2) besteht, und daß der Kabinenluftauslaß (22) aus den beiden miteinander verbundenen Luftkanälen (12.1, 12.2) besteht, wobei in Längsrichtung des einen Luftkanales (12.1) das in einer Öffnung angeordnete Ausblasventil (3.2, 3.4, 3.6) und in Querrichtung des anderen Luftkanales (12.2) das im Kanalquerschnitt angeordnete Absaugventil (3.1, 3.3, 3.5) sitzt und wobei die entsprechende Luftstromverbindungsleitung (12), mit der die frischluftgemischte Rezirkulationsluft (15) in Flugzeuglängsrichtung zu den anderen Kabinenzonen verteilt wird, an die Öffnung fest angeformt ist und wobei der eine Luftkanal (12.1) zum Deckenluftauslaß (4.1) verbindungsmäßig geführt und der andere Luftkanal (12.2) mit der einen Teil der verbrauchten Kabinenluft führenden Luftstromverbindungsleitung (12) verbunden ist.

7. Belüftungssystem nach Anspruch 1, **dadurch gekennzeichnet, daß** der Individualluftauslaß (5) aus dem Luftdurchlauf (20) mit rohrförmigem Anschlußstutzen, einem Luftfilter (21) und wenigstens einer Luftdusche (5.1, 5,2, 5.3, 5.4) besteht, die anstelle des Schutzgitters (18) befestigt ist.

8. Belüftungssystem nach den Ansprüchen 1, 2 und 7, **dadurch gekennzeichnet, daß** hauptsächlich in den Raucherbereichen im Passagierflugzeug sich das Absaugventil (3.1, 3.3, 3.5) in geöffnetem Zustand und das Ausblasventil (3.2, 3.4, 3.6) in geschlossenem Zustand befindet und dort die Luftdusche (5.1, 5,2, 5.3, 5.4) durch das Schutzgitter (18) ersetzt ist.

9. Belüftungssystem nach den Ansprüchen 1, 2 und 7, **dadurch gekennzeichnet, daß** in den Nichtraucherbereichen im Passagierflugzeug sich das Absaugventil (3.1, 3.3, 3.5) in geschlossenem Zustand und das Ausblasventil (3.2, 3.4, 3.6) in geöffnetem Zustand befindet und dort das Schutzgitter (18) durch die Luftdusche (5.1, 5,2, 5.3, 5.4) ersetzt ist.

10. Belüftungssystem nach den Ansprüchen 1 und 6, **dadurch gekennzeichnet, daß** die Luftmengenventile (3.1, 3.2; 3.3, 3.4; 3.5, 3.6) des Kabinenluftauslasses (22) als Klappenventil ausgeführt sind, die sich bei einer Änderung des Kabinenlayouts der Flugzeugkabine (1) von Hand oder automatisch in eine geöffnete oder geschlossene Stellung umstellen lassen, wobei durch die Ventilbetätigung die Umstellung von Ausblasungs- auf Absaugungsbetrieb oder umgekehrt erfolgt.

## Claims

1. A passenger aircraft cabin incorporating a ventilation system for reducing the concentration of impurities in the passenger compartment of the aircraft, especially in the smoking zones of a passenger aircraft, wherein said system enables one to remove particles, smells and other pollutants, and in particular, carbon dioxide, cigarette smoke or traces of other polluting materials from the smoking area in an aircraft cabin (1) in such a manner as to satisfy human requirements, and wherein the passenger area of the aircraft is located on the floor of the cabin with said floor being disposed above a sub-floor region (7), said passenger area of the aircraft having associated therewith a plurality of double seats (6.1, 6.2, 6.3, 6.4) which are assembled together within the cabin area to form rows of seats that are arranged along an aircraft fuselage in the form of a pressurised fuselage, said system consisting of an air mixing unit (2), an air-quantity valve unit (3), an air outlet in the cabin ceiling (4) and an individual air outlet (5) all of which are connected together, there being a direct connection between the air-quantity valve unit (3) and the cabin air outlet (4) and also the individual air outlet (5), wherein the air mixing unit (2) has two inputs to one of which fresh air (13) is supplied, wherein there is a connection between a recirculating fan (9.1) and the cabin floor or a region close to the floor of the cabin (1) of the aircraft, wherein the recirculating fan (9.1) receives recirculated air (14) in the form of spent cabin air at the input thereof and expels it at the output side thereof to the air mixing unit (2) via a next connection to the other input of the air mixing unit (2), wherein a further connection, which is connected to other zones in the cabin of the passenger aircraft and supplies a processed mixture of air (15) in the form of recirculating air incorporating a mixture of fresh air therein, is branched off from the connection between the air mixing unit (2) and the air-quantity valve unit (3), wherein a further downstream connection is provided between the air-quantity valve unit (3) and the downstream sanitary zones of the passenger aircraft, said downstream connection having another connection branched-off therefrom which leads away a part of the spent cabin air and/or the waste air from other zones to the exterior of the aircraft fuselage, and wherein, in regards to the flow of air, all of the connections are implemented in the form of air-flow connecting lines (12), **characterised in that**
- the air-quantity valve unit (3) consists of a plurality of air-quantity valves (3.1, 3.2, 3.3, 3.4, 3.5, 3.6) which are assembled together in pairs such that one valve pair is always formed by an extractor valve (3.1, 3.3, 3.5) and a blower valve (3.2, 3.4, 3.6) having a bridging connection between the connector sides thereof, wherein the other connectors of the extractor valves (3.1, 3.3, 3.5) are looped around to the other branched connection, whilst the other connectors of the blower valves (3.2, 3.4, 3.6) are connected to the connection used for conveying the air mixture (15),
- the air outlet in the cabin ceiling (4) consists of a plurality of ceiling air outlets (4.1, 4.2) which are located below the ceiling region of the aircraft cabin (1) on the wall of the cabin above the luggage lockers fixed above the laterally disposed rows of double seats (6.1, 6.4), at least one ceiling air outlet (4.1) being switchable by means of a valve pair whose bridging connection is connected thereto and a further ceiling air outlet (4.2), which functions in the blower position, being connected directly to the connection used for conveying the air mixture (15),
- the individual air outlet (5) consists of a plurality of air nozzles (5.1, 5.2, 5.3, 5.4) which are located directly above the double seats (6.1, 6.2, 6.3, 6.4) below the overhead lockers, or it is formed by an air passage (20) comprising a tubular pipe union, a replaceable air filter (21) and a protective grill (18), said air filter (21) and said protective grill (18) being seated on said air passage (20) along a suction surface facing the head region of the double seats (6.1, 6.2, 6.3, 6.4) and the protective grill (18) being mounted on the air passage (20) for fixing the air filter (21) to the air passage (20), wherein the bridging connection of another valve pair is connected to the air nozzles (5.1, 5.2, 5.3, 5.4) or to the pipe union of the air passage (20),
- an additional connection is branched off from the connection between the recirculating fan (9.1) and the floor of the cabin or the region near the floor, said additional connection being connected to a pressure regulating valve (8) which conveys a further part of the spent cabin air to the exterior of the aircraft fuselage via a connection connected downstream thereof,
- a recirculating filter, which filters a residual part of the spent cabin air that does not leave the aircraft fuselage via the downstream connection, is connected upstream of said recirculating fan (9.1).

2. A ventilation system in accordance with Claim 1,
**characterised in that** the air-quantity valve unit (3) consists of two pairs of valves which are connected in such a manner that
a) the extractor valve (3.1) of the one pair of valves and the blower valve (3.4) of the other pair of valves are closed and the remaining valves of the pairs of valves concerned are open, whereby the air nozzles (5.1, 5.2, 5.3, 5.4) associated with the air flow expel the recirculating air (15) incorporating a mixture of fresh air in the operative blower position, and the one ceiling air outlet (4.1) functioning in the extraction position removes a part of the spent cabin air (16) via the extractor valve (3.3) whilst the further ceiling air outlet (4.2) functioning in the blower position, which said outlet is connected to the connection conveying the recirculating air incorporating a mixture of fresh air, expels this processed air,
or
b) the extractor valve (3.1) of the one pair of valves and the blower valve (3.4) of the other pair of valves are open and the remaining valves of the pairs of valves concerned are closed, whereby the air nozzles (5.1, 5.2, 5.3, 5.4) associated with the air flow receive spent cabin air (16) in the operative extraction position, and the ceiling air outlet (4.1) functioning in the operative blower position conveys the recirculating air (15) incorporating a mixture of fresh air via the blower valve (3.4) whilst the further ceiling air outlet (4.2) functioning in the blower position, which said outlet is connected to the connection conveying the recirculating air incorporating a mixture of fresh air, expels this processed air,
or
c) the extractor valve (3.1) of the one pair of valves and the extractor valve (3.3) of the other pair of valves are open and the remaining valves of the pairs of valves concerned are closed, whereby the air nozzles (5.1, 5.2, 5.3, 5.4) associated with the air flow receive the spent cabin air (16) when in the operative extraction position, and the ceiling air outlet (4.1) functioning in the operative extraction position removes the spent cabin air (16) via the extractor valve (3.3) whilst the further ceiling air outlet (4.2) operating in the blower position, which said outlet is connected to the connection conveying the recirculating air incorporating a mixture of fresh air, expels this processed air.

3. A ventilation system in accordance with Claim 1,
**characterised in that** the air-quantity valve unit (3) consists of at least three pairs of valves and the further ceiling air outlet (4.2) is connected to the bridging connection of an additional pair of valves, and **in that**, in the case of said additional pair of valves, the extractor valve (3.5) is open whilst the blower valve (3.6) is closed, whereby the further ceiling air outlet (4.2) functioning in the extraction position removes the spent cabin air (16) via the extractor valve (3.5).

4. A ventilation system in accordance with Claim 1,
**characterised in that** a sensor unit, which responds to the presence of toxic substances in the cabin air and electrically actuates the relevant pair of valves, is seated in the vicinity of the ceiling air outlets (4.1, 4.2) so that said relevant pair of valves are switched automatically.

5. A ventilation system in accordance with Claim 1,
**characterised in that** the branched-off other connection consists of an exhaust air blower (9.2) connected to the further downstream connection and of a venturi unit (10) downstream thereof, said blower and said venturi unit being interconnected and the latter being in the form of a Laval nozzle, whereby the branched connection conveys all of the air that has been extracted from an overhead region extending over the area below the overhead lockers and the air from the ceiling region of the aircraft cabin (1), including the spent air from the sanitary zones of the passenger aircraft, to the exterior of the aircraft fuselage in the form of exhaust air, or, **in that** a connection, which is connected by the additional connection to the pressure regulating valve (8) and closely precedes the latter, is branched off downstream of the exhaust air blower (9.2), whereby the downstream stub line to the venturi unit (10) is dispensed with and the exhaust air, together with the further part of the spent cabin air, leaves the fuselage of the aircraft via this connection and not via the venturi unit (10).

6. A ventilation system in accordance with Claim 1,
**characterised in that** a cabin air outlet (22), which represents a combination of means of the air-quantity valve unit (3) and the cabin ceiling air outlet (4), consists of the integration of one of the pertinent pair of valves that are associated with the air flow with air channels (12.1, 12.2) accommodating the air-quantity valves (3.1, 3.2; 3.3, 3.4; 3.5, 3.6), and **in that** the cabin air outlet (22) consists of the two interconnected air channels (12.1, 12.2), wherein the blower valve (3.2, 3.4, 3.6) arranged in an opening is seated in the longitudinal direction of the one air channel (12.1) whilst the extractor valve (3.1, 3.3, 3.5) arranged in the channel cross-section is seated in the transverse direction of the other air channel (12.2) and wherein the corresponding air flow connecting line (12), with which the recirculating air (15) incorporating a mixture of fresh air is distributed to the other zones of the cabin in the longitudinal direction of the aircraft, is formed rigidly on the opening, and wherein the one air channel (12.1) is led in connecting manner to the ceiling air outlet (4.1) whilst the other air channel (12.2) is connected to the air flow connecting line (12) conveying a part of the spent cabin air.

7. A ventilation system in accordance with Claim 1,
**characterised in that** the individual air outlet (5) consists of the air passage (20) having a tubular pipe union, an air filter (21) and at least one air nozzle (5.1, 5.2, 5.3, 5.4), which is attached instead of the protective grill (18).

8. A ventilation system in accordance with Claims 1, 2 and 7,
**characterised in that** the extractor valve (3.1, 3.3, 3.5) is in the open state and the blower valve (3.2, 3.4, 3.6) is in the closed state mainly in the smoking areas of the passenger aircraft and here, the air nozzle (5.1, 5.2, 5.3, 5.4) is replaced by the protective grill (18).

9. A ventilation system in accordance with Claims 1, 2 and 7,
**characterised in that** the extractor valve (3.1, 3.3, 3.5) is in the closed state and the blower valve (3.2, 3.4, 3.6) is in the open state in the non-smoking areas of the passenger aircraft and here, the protective grill (18) is replaced by the air nozzle (5.1, 5.2, 5.3, 5.4).

10. A ventilation system in accordance with Claims 1 and 6,
**characterised in that** the air-quantity valves (3.1, 3.2; 3.3, 3.4; 3.5, 3.6) for the cabin air outlet (22) are in the form of flap valves which can be set into an open position or into a closed position either manually or automatically in the event of an alteration in the cabin layout of the aircraft cabin (1), whereby the change from the blowing to the extraction operation or vice versa is effected by the actuation of the valves.

## Revendications

1. Cabine d'avion avec dispositif de ventilation pour diminuer la concentration de contaminants dans la cabine, et plus particulièrement dans les compartiments fumeurs d'un avion, les particules, odeurs ou dépôts de saletés, et plus particulièrement le dioxyde de carbone, l'odeur de cigarettes ou les traces d'autres substances polluantes étant supprimés des compartiments fumeurs d'une cabine d'avion (1), en fonction des besoins humains, la zone de passagers de l'avion étant située sur le pont de la cabine, au-dessus d'une zone inférieure (7), cette zone de passagers étant reliée à plusieurs sièges doubles (6.1, 6.2, 6.3, 6.4) placés en rangées dans la zone de cabine, le long du fuselage, formant ainsi un corps sous pression se composant d'un mélangeur à air (2), d'une soupape de mélange d'air (3), d'une évacuation d'air dans le toit de la cabine (4) et d'une évacuation d'air individuelle séparée (5) reliés les uns aux autres, une liaison directe existant entre la soupape de mélange d'air (3), l'évacuation d'air dans la cabine (4) et l'évacuation individuelle séparée (5), le mélangeur à air (2) possédant deux entrées dont une pour l'acheminement d'air frais (13), une liaison existant entre une soufflerie de recirculation (9.1) et la zone de pont de la cabine ou la zone de la cabine (1) proche du pont (1), la soufflerie de recirculation (9.1) aspirant, du côté de l'entrée, l'air de recirculation (14) comme de l'air de cabine utilisé puis transmet celui-ci, du côté de la sortie, au mélangeur à air, via une connexion directe avec l'autre entrée du mélangeur
d'air (2), entrée au niveau de laquelle une autre connexion guidant l'air mélangé (15) préparé comme air de recirculation mélangé à de l'air frais et reliée aux autres zones de cabines de l'avion est déviée vers la connexion entre le mélangeur à air (2) et la soupape de mélange d'air (3), entrée au niveau de laquelle une autre connexion ultérieure est établie entre la soupape de mélange d'air (3) et les zones sanitaires ultérieures de l'avion, connexion vers laquelle est déviée une autre connexion guidant l'air de cabine utilisé et / ou l'air zonal sortant vers l'extérieur du fuselage de l'avion, et au niveau de laquelle toutes les connexions sont assurées par des conduites de raccordement à courant atmosphérique (12),
et **caractérisée en ce que**
- la soupape de mélange d'air (3) se compose de plusieurs soupapes de mélange d'air (3.1, 3.2, 3.3, 3.4, 3.5, 3.6) disposées en paires, chaque paire de soupapes étant composée d'une soupape d'aspiration (3.1, 3.3, 3.5) et d'une soupape d'évacuation (3.2, 3.4, 3.6) reliées par un pont de liaison, les liaisons restantes des soupapes d'aspiration (3.1, 3.3, 3.5) étant montées en boucle et reliées avec l'autre liaison déviée et les liaisons restantes des soupapes d'évacuation (3.2, 3.4, 3.6) étant reliées à la liaison guidant l'air mélangé (15),
- l'évacuation d'air dans le toit de la cabine (4) se compose de plusieurs évacuations d'air dans le toit (4.1, 4.2) situées en dessous de la zone du toit de la cabine d'avion (1), sur la paroi de la cabine située au-dessus des compartiments pour bagages fixés aux doubles rangées de sièges latérales (6.1, 6.4), paroi à laquelle est reliée au moins une évacuation d'air dans le toit (4.1) via le pont de liaison d'une paire de soupapes, cette évacuation étant réversible et une évacuation d'air dans le toit supplémentaire (4.2) actionnée à l'état d'évacuation étant directement reliée à la liaison guidant l'air mélangé (15),
- l'évacuation individuelle séparée (5) se compose de plusieurs bouches d'air (5.1, 5.2, 5.3, 5.4) situées directement au-dessus des doubles sièges (6.1, 6.2, 6.3, 6.4) et en dessous des compartiments situés au dessus de la tête ou composées d'un passage d'air (20) avec manchons de raccordement tubulaires, d'un filtre à air remplaçable (21) et d'un grillage de protection (18), ledit grillage de protection (18) fixant le filtre à air (21) sur le passage d'air (20) étant lui-même fixé sur le passage d'air (20) et le pont de liaison d'une autre paire de soupapes avec les bouches d'air (5.1, 5.2, 5.3, 5.4) ou les manchons de raccordement du passage d'air (20),
- une liaison supplémentaire reliée à une soupape de régulation de pression (8) a été déviée par rapport à la liaison entre la soufflerie de recirculation (9.1) et le pont de la cabine ou la zone proche du pont, cette liaison supplémentaire guidant une autre partie de l'air de cabine consommé vers l'extérieur du fuselage de l'avion,
- un filtre de recirculation filtrant une partie résiduelle de l'air de cabine consommé qui ne quitte pas le fuselage de l'avion via la liaison ultérieure a été commuté en amont d'une soufflerie de recirculation.

2. Dispositif de ventilation selon la revendication 1, **caractérisé en ce que** la soupape de mélange d'air (3) se compose de deux paires de soupapes commutées de telle sorte que
a) la soupape d'aspiration (3.1) d'une des paires de soupapes et la soupape d'évacuation (3.4) de l'autre paire sont fermées et les soupapes restantes de la paire de soupapes concernées sont ouvertes, les bouches d'air (5.1, 5.2, 5.3, 5.4) raccordées au courant atmosphérique émettant, en position commutée d'évacuation, de l'air de recirculation (15) mélangé à de l'air frais, l'évacuation d'air (4.1) actionnée en position d'aspiration guidant une partie de l'air de cabine consommé (16) via la soupape d'aspiration (3.3) et l'autre évacuation d'air dans le toit (4.2) actionnée en position d'évacuation et reliée à la liaison guidant l'air de recirculation mélangé à de l'air frais libérant cet air préparé
ou
b) la soupape d'aspiration (3.1) d'une des paires de soupapes et la soupape d'évacuation (3.4) de l'autre paire sont ouvertes et les soupapes restantes de la paire de soupapes concernée sont fermées, les bouches d'air (5.1, 5.2, 5.3, 5.4) raccordées au courant atmosphérique captant, en position commutée d'aspiration, de l'air de cabine consommé (16) et l'évacuation d'air dans le toit (4.1) en position commutée d'évacuation libérant l'air de recirculation (15) mélangé à de l'air frais via la soupape d'évacuation (3.4) et l'autre évacuation d'air dans le toit (4.2) actionnée en position d'évacuation et reliée à la liaison guidant l'air de recirculation mélangé à de l'air frais libérant cet air préparé.
ou
c) la soupape d'aspiration (3.1) d'une des paires de soupapes et la soupape d'aspiration (3.3) de l'autre paire de soupapes sont ouvertes et les soupapes restantes de la paire de soupapes concernée sont fermées, les bouches d'air (5.1, 5.2, 5.3, 5.4) reliées au courant atmosphérique captant, en position commutée d'aspiration, l'air de cabine (16) consommé, l'évacuation d'air dans le toit (4.1) en position commutée d'aspiration guidant l'air de cabine consommé (16) via la soupape d'aspiration (3.3) et l'évacuation d'air dans le toit (4.2) actionnée en position d'évacuation et connectée à la liaison guidant l'air de recirculation mélangé à de l'air frais libérant cet air préparé.

3. Dispositif d'évacuation selon la revendication 1, **caractérisé en ce que** la soupape de mélange d'air (3) se compose d'au moins trois paires de soupapes et l'évacuation d'air dans le toit plus éloignée (4.2) est reliée à une paire de soupapes supplémentaire par un pont de liaison, et **en ce que** la soupape d'aspiration (3.5) de la paire de soupapes supplémentaire est ouverte et la soupape d'évacuation (3.6) fermée, l'évacuation d'air dans le toit plus éloignée (4.2), en position d'aspiration, guide l'air de cabine consommé (16) via la soupape d'aspiration (3.5).

4. Dispositif de ventilation selon la revendication 1, **caractérisé en ce que** un bloc détecteur est situé à proximité des évacuations d'air dans le toit (4.1, 4.2), ce bloc détecteur réagissant à la composition de l'air en matières toxiques et activant électriquement la paire de soupapes concernée pour provoquer sa commutation automatique.

5. Dispcsitif de ventilation selon la revendication 1, **caractérisé en ce que** l'autre liaison déviée se compose d'une soufflerie d'évacuation (9.2) reliée à l'autre liaison ultérieure et d'une unité Venturi (10) située en aval de cette soufflerie, cette soufflerie et cette unité étant reliées l'une à l'autre, l'unité étant conçue sous la forme d'une tuyère de Laval et la connexion déviée guide vers l'extérieur du fuselage l'air aspiré à partir d'une zone située au-dessus de la tête qui s'étend sous les compartiments au-dessus de la tête et à partir de la zone de toit de la cabine d'avion (1) y compris l'air consommé à partir des zones sanitaires de l'avion, ou **en ce que** une connexion est déviée en aval de la soufflerie d'évacuation d'air (9.2), ladite connexion étant reliée en amont avec la connexion supplémentaire à la soupape de réglage de la pression (8), à proximité de cette soupape, la conduite de branchement à l'unité Venturi située en aval (10) disparaissant et l'air évacué quittant le fuselage en même temps que le reste de l'air de cabine consommé, via cette connexion et non via l'unité Venturi (10).

6. Dispositif de ventilation selon la revendication 1, **caractérisé en ce qu'**une sortie d'air de cabine (22) représentant un ensemble de moyens de l'unité de soupape de mélange d'air (3) et de la sortie d'air située dans le toit de la cabine (4) résulte de l'intégration d'une paire de soupapes reliée au courant atmosphérique avec les canaux d'air (12.1, 12.2) recevant les soupapes de mélange d'air (3.1, 3.2 ; 3.3, 3.4 ; 3.5, 3.6), et **en ce que** la sortie de l'air de cabine (22) comprend les deux canaux d'air (12.1, 12.2) reliés l'un à l'autre, la soupape d'évacuation (3.2, 3.4, 3.6) située dans une ouverture étant disposée dans le sens longitudinal d'un des canaux d'air (12.1) et la soupape d'aspiration (3.1, 3.3, 3.5) située dans la section transversale du canal étant disposée dans le sens transversal de l'autre canal d'air ( 12.2), la conduite de raccordement au courant atmosphérique (12à correspondante grâce à laquelle l'air de recirculation (15) mélangé à l'air frais est réparti parmi les autres zones de cabine, dans le sens longitudinal de l'avion, étant fixée de manière rigide à l'ouverture et un des canaux d'air (12.1) étant guidé vers la sortie d'air dans le toit (4.1), de manière à s'y raccorder, l'autre canal d'air (12.2) étant relié à une partie de la conduite de raccordement conduisant l'air de cabine consommé.

7. Dispositif de ventilation selon la revendication 1, **caractérisé en ce que** la sortie d'air indépendante (5) est constituée du passage d'air (20) constitué de raccords tubulaires, d'un filtre à air (21) et d'au moins une bouche d'air (5.1, 5.2, 5.3, 5.4) fixée à la place du grillage de protection (18).

8. Dispositif de ventilation selon les revendications 1, 2 et 7, **caractérisé en ce que**, principalement dans les zones fumeurs de l'avion, la soupape d'aspiration (3.1, 3.3, 3.5) est en position ouverte et la soupape d'évacuation (3.2, 3.4, 3.6) en position fermée, la bouche d'air (5.1, 5.2, 5.3, 5.4) ayant été remplacée par le grillage de protection.

9. Dispositif de ventilation selon les revendications 1, 2 et 7, **caractérisé en ce que** dans les zones non fumeurs de l'avion, la soupape d'aspiration (3.1, 3.3, 3.5) se trouve en position fermée et la soupape d'évacuation (3.2, 3.4, 3.6) en position ouverte, le grillage de protection (18) ayant été remplacé par la bouche d'air (5.1, 5.2, 5.3, 5.4).

10. Dispositif de ventilation selon les revendications 1 et 6, **caractérisé en ce que** les soupapes de mélange d'air (3.1, 3.2 ; 3.3, 3.4 ; 3.5, 3.6) de la sortie de l'air de cabine (22) se présentent sous la forme d'une soupape à clapets pouvant, en cas de modification de l'aménagement de la cabine d'avion (1), être commutés manuellement ou automatiquement en position ouverte ou fermée, l'actionnement des soupapes entraînant la commutation de la position d'évacuation vers la position d'aspiration ou inversement.
